# EUROPÄISCHE PATENTSCHRIFT

(11) **EP 2 481 568 B1**
(45) Veröffentlichungstag und Bekanntmachung des Hinweises auf die Patenterteilung: **23.11.2016**
(21) Anmeldenummer: 12000607.7
(22) Anmeldetag: 31.01.2012
(51) Int. Cl.: B32B 13/02, B32B 13/06, B32B 15/08, B32B 15/10, B32B 15/12, E04C 2/28

(54) **Beschichtete Baustoffplatte**
Coated material board
Panneau de construction revêtu

(30) Priorität: 31.01.2011 DE 202011002155 U
(43) Veröffentlichungstag der Anmeldung: 01.08.2012
(73) Patentinhaber: Holzbau Schmid GmbH & Co. KG, 73099 Adelberg (DE)
(72) Erfinder: Schmid, Claus, 73099 Adelberg (DE)
(74) Vertreter: Ring & Weisbrodt

(56) Entgegenhaltungen:
- EP-A1- 0 043 144
- EP-A2- 1 197 714
- EP-A2- 1 375 770
- DE-A1- 2 453 761
- DE-C1- 4 434 627
- DE-U- 7 032 003
- "DIN 4102-1 Brandverhalten von Baustoffen und Bauteilen Teil 1: Baustoffe Begriffe, Anforderungen und Prüfungen" In: "DIN 4102-1 Brandverhalten von Baustoffen und Bauteilen Teil 1: Baustoffe Begriffe, Anforderungen und Prüfungen", 1. Mai 1998 (1998-05-01), DIN Deutsches Institut für Normung e.V., XP55022865,

## Beschreibung

Die vorliegende Erfindung betrifft eine Baustoffplatte mit einer zwei gegenüberliegende Hauptflächen aufweisenden mineralischen, nicht brennbaren Grundplatte.

Nicht brennbare Baustoffplatten sind aus dem Stand der Technik bekannt. Sie werden für eine Vielzahl von Anwendungen eingesetzt, zum Beispiel im Innenausbau von Gebäuden. Ein weiterer Verwendungszweck besteht in dem Ersatz von Pressspankernen in Möbelstücken durch solche mineralischen Baustoffplatten, wie beispielsweise in Büro- oder Küchenschränken. Diese Platten können aus unterschiedlichen Rohstoffen und auf verschiedene Weisen hergestellt werden, wobei häufig silikatische Materialien zum Einsatz kommen.

Je nachdem, zu welchem Verwendungszweck die Baustoffplatte vorgesehen sein soll, kann diese beispielsweise aus einer Rohstoffmischung über Verpressen hergestellt werden, wodurch Platten mit geringer Dichte und guter Wärmeisolation erhalten werden. Diese Baustoffplatte werden häufig nach dem Verpressen bei hohen Temperaturen gesintert, damit ausreichende Festigkeiten erzielt werden. Sie lassen sich danach mit denselben Methoden und Werkzeugen wie Presspanplatten bearbeiten, insbesondere Bohren, Fräsen oder Schneiden.

Zur Formgebung finden manchmal auch anorganische Bindemittel Verwendung - organische Bindemittel scheiden wegen ihrer mangelnden Temperaturresistenz und ihrer Brennbarkeit in der Regel aus. Allerdings erhöht sich durch die Verwendung anorganischer Bindemittel zum einen das spezifische Gewicht der Baustoffplatte und zum anderen kann sich deren Dämmleistung reduzieren, was beides, je nach Anwendungszweck, unerwünscht ist. Baustoffplatten, die ausschließlich durch Verpressen der Rohstoffe hergestellt werden können, sind in der Patentschrift EP 1 140 729 B1 beschrieben.

Die zuvor genannten Baustoffplatte enthalten oft neben feinteiligen Substanzen gröber partikuläre silikatische Bestandteile, wie beispielsweise Perlite. Durch den Zusatz von Perliten lassen sich zwar Baustoffplatten mit äußerst geringem spezifischen Gewicht von beispielsweise 450 bis 600 kg/m³ fertigen, jedoch ist deren Bearbeitbarkeit nicht besonders einfach. Insbesondere das Schleifen der Planflächen führt oft zu unregelmäßigen Oberflächen. Die Schwierigkeiten beim Schleifen sind möglicherweise darin begründet, dass Perlitepartikel aus dem Plattenverbund beim Schleifen herausgelöst werden und dadurch kleine "Krater" in der Oberfläche hinterlassen. Zudem wirken diese Partikel selbst als Schleifmittel, so dass die Baustoffplatte nach dem Schleifen eine wellige Oberfläche erhält.

Das Schleifen der Oberfläche ist In der Regel erforderlich, wenn die Baustoffplatte mit einer Deckschicht, beispielsweise mit einer Fumierschicht versehen werden soll. Der Grund dafür liegt darin, dass sich die in aller Regel sehr dünne Furnierholzschicht an die Oberflächentopographie der Beustoffplatte anschmiegt, so dass eine furnierte Baustoffplatte ebenfalls eine unebene Oberfläche aufweist, wenn die darunter liegende Grundplatte nicht glatt ist.

Es existieren zwar andererseits Baustoffplatten mit einer anderen Zusammensetzung, deren Oberfläche sich besser bearbeiten lässt, jedoch weisen diese grundsätzlich ein deutlich höheres spezifisches Gewicht auf. Dies ist beispielsweise dann nachteilig, wenn mineralische Baustoffplatte zum Ersatz von Pressspanplatten in Möbelstücken oder Türen verwendet werden sollen. Dies sind beispielsweise solche Platten, in denen Gips als anorganisches Bindemittel verwendet wird. Diese sind am Markt als Gipskartonplatten erhältlich. Solche Gipskartonplatten lassen sich zwar verhältnismäßig leicht bearbeiten, haben jedoch eine Reihe von Nachteilen. Zunächst hat eine Gipskartonplatte ein Mindestgewicht von 800 kg/m³, wodurch die Platte insgesamt sehr schwer wird, wobei sie nicht einmal selbsttragende Eigenschaften besitzt. Gipskartonplatten sind zudem ohne spezielle Behandlung nicht für die Anwendung in Feuchträumen oder gar in der Außenanwendung geeignet, da sie bei Feuchtigkeitseinwirkung zum Faulen neigen.

Die der vorliegenden Erfindung zugrunde liegende Aufgabe besteht also darin, eine Baustoffplatte der eingangs genannten Art dahingehend zu modifizieren, dass diese leichter mit einer Deckschicht, beispielsweise mit einer Furnierholzschicht versehen werden kann.

Diese Aufgabe wird gelöst durch eine Baustoffplatte mit einer zwei gegenüberliegende Hauptflächen aufweisenden mineralischen, nicht brennbaren Grundplatte, bei der zumindest eine der Hauptflächen wenigstens abschnittsweise mit einer Metallschicht , wie in Anspruch 1 definiert, versehen list.

Der Erfindung liegt die Erkenntnis zugrunde, dass eine Baustoffplatte, vor allem eine leichte Baustoffplatte, welche Perlite enthält, einfacher mit einer Deckschicht ausgerüstet werden kann, wenn die Baustoffplatte auf ihren jeweiligen Flächen mit einer Metallschicht versehen wird. Die Metallschicht stellt quasi eine Ausgleichsschicht dar und bietet eine hochgradig ebene Oberfläche zur Befestigung einer Deckschicht.

Es liegt ebenfalls im Rahmen der vorliegenden Erfindung, die Baustoffplatte auf beiden Hauptflächen durchgängig mit einer Metallschicht zu versehen. Wenn die Baustoffplatte außerdem noch einen Umleimer erhalten soll, können auch die Stoßkanten der Grundplatte, zusätzlich mit Metallschichten versehen sein. Letzteres ist allerdings nicht unbedingt erforderlich, da bei den Stoßkanten leichte Unebenheiten der Grundplatte durch den relativ schmalen Umleimer besser ausgeglichen werden können.

Die Metallschicht kann prinzipiell aus jeder Art von Metall gefertigt sein und entspricht in der Regel einem Blech. Vorzugsweise werden jedoch Leichtmetalle verwendet. Hierunter werden gemäß der Definition in "A.F. Holleman und N. Wiberg: Lehrbuch der Anorganischen Chemie. 102. Auflage, S. 1141, Berlin 2007, Walter de Gruyter" diejenigen Metalle oder auch Legierungen verstanden, deren Dichte unterhalb von 5 g/cm³ beträgt.

Das Metall für den Einsatz als Metallschicht ist Aluminium oder dessen Legierungen, beispielsweise mit Magnesium, Kupfer, Zink, Mangan und/ oder Silicium. Die Metallschicht besteht aus den zuvor genannten Metallen beziehungsweise Legierungen.

Die Verwendung von Aluminium oder seinen Legierungen hat zudem den Vorteil, dass diese in der Regel schon bei für Brandmaßstäbe geringen Temperaturen zu schmelzen beginnen. So besitzt Aluminium einen Schmelzpunkt von nur 660 °C. Je nach Wahl einer optional auf der Aluminiumschicht aufgebrachten Deckschicht kann die Aluminiumschmelze die Deckschicht im Brandfall teilweise benetzen, wodurch der Sauerstoffzutritt unterbunden wird. Damit kann eine Entzündung der Deckschicht verhindert oder zumindest hinausgezögert werden. Zusätzlich wird über den Phasenübergang "fest - flüssig" des Aluminiums eine Kühlwirkung erzeugt, die die Brandschutzeigenschaften der Baustoffplatte verbessert.

Die Dicke der Metallschicht kann über weite Bereiche variieren und richtet sich unter anderem nach der Fläche der Grundplatte beziehungsweise den gewünschten Flächengewichten der Baustoffplatte. Um eine ausreichende Nivellierung einer unregelmäßigen Grundplattenoberfläche zu gewährleisten, ist die

Dicke zumindest 0,2 mm, insbesondere zumindest 0,5 mm. Um das Quadratmetergewicht der Baustoffplatte nicht zu sehr zu erhöhen, kann die Dicke der Metallschicht von 0,2 bis 6 mm betragen, insbesondere von 0,5 bis 4 mm, vorzugsweise von 1 bis 2 mm.

Die Grundplatte kann aus verschiedenen Materialien gefertigt sein. So ist es zwar grundsätzlich möglich, einen gipsbasierten Grundkörper einzusetzen, jedoch ist der wenigstens anteilige Einsatz kieselsäurehaltiger Materialien bevorzugt, insbesondere der Einsatz Silicat-haltiger Materialien. Es liegt jedoch ebenso im Rahmen der vorliegenden Erfindung, eine kieselsäurehaltige Grundplatte zu verwenden, die weitestgehend vollständig aus kieselsäurehaltigem Material, insbesondere Silicathaltigem Material besteht

Ob dem kieselsäurehaltigen beziehungsweise Silicat-haltigen Material der Grundplatte Gips zugegeben wird und wenn ja, in welchem Maße, hängt von dem Anwendungszweck der Baustoffplatte ab. Generell werden durch den Zusatz von Gips die Brandschutzeigenschaften einer solchen Baustoffplatte im Brandfall insofern verbessert, als das im Gips gebundene Kristallwasser im Brandfall verdampft und hierdurch die Brandgegenseite der Platte gekühlt wird. Andererseits erhöht der Gipszuschlag das spezifische Gewicht der Platte, reduziert Ihre Feuchtigkeltstoleranz und die Stabilität. Mit anderen Worten wird der Gipsanteil den gewünschten Brandschutzeigenschaften angepasst.

Besonders geeignet ist eine Grundplatte, die Perlite enthält Derartige Platten zeichnen sich durch ein besonders geringes spezifisches Gewicht aus, eigneten sich jedoch nach den bislang bekannten Techniken nicht sehr gut für die Beschichtung mit einer Deckschicht, beispielsweise mit einer Furnierholzschicht. Das gilt vor allem für Platten mit hohem Perlite-Anteil. Besonders geeignet sind Grundplatten, welche lediglich durch Verpressen ihrer trocknen Bestandteile und gegebenenfalls anschließendes Sintern erhalten werden.

Nach einer bevorzugten Ausführungsform der erfindungsgemäßen Baustoffplatte weist die Grundplatte eine Dichte von 800 kg/m³ oder weniger auf, insbesondere 700 kg/m³ oder weniger, bevorzugt 650 kg/m³ oder weniger, besonders bevorzugt 450 kg/m³ oder weniger. Mit solchen Platten lassen sich beispielsweise furnierte Baustoffplatten herstellen, deren spezifisches Gewicht in etwa demjenigen solcher Platten entspricht, die einen Pressspankern besitzen, also etwa zwischen 600 bis 900 kg/m³. Die erfindungsgemäßen Baustoffplatten zeichnen sich jedoch gegenüber denjenigen mit Presspankem durch ihre Nichtbrennbarkeit aus. Außerdem entstehen im Brandfall durch den mineralischen Kern der erfindungsgemäßen Baustoffplatten weder Rauch, noch gesundheitsschändliche Dämpfe.

Bei einer erfindungsgemäßen Baustoffplatte kann die Metallschicht auf unterschiedliche Weise mit der Grundplatte verbunden sein, wobei es bevorzugt ist, wenn die Metallschicht mit der Grundplatte verklebt ist. Auf diese Weise werden keine von außen sichtbaren Befestigungsmittel benötigt und es wird eine großflächige Materialverbindung erzielt. Zu diesem Zweck ist der Einsatz eines Wasserglasklebers besonders bevorzugt. Mit diesem lässt sich die Metallplatte, vor allem bei der Verwendung einer Aluminium-haltigen Platte sehr zuverlässig auf der mineralischen Grundplatte befestigen. Dies liegt möglicherweise an der chemischen Ähnlichkeit von Wasserglas zu den silikatischen Bestandteilen der Grundplatte einerseits, sowie an dem alkalischen pH des Wasserglasklebers andererseits, der ein leichtes Anlösen des Aluminiums beziehungsweise der das Aluminium bedeckenden Al₂O₃-Schicht bewirken kann.

Ein weiterer Vorteil eines Wasserglasklebers besteht darin, dass dieser im Brandfall durch Wasserverdunstung kühlende Eigenschaften entwickelt. Schließlich zeichnen sich viele Wasserglaskleber auch durch spaltüberbrückende Eigenschaften auf, das heißt, dass der Klebstoff gewisse Unebenheiten der Grundplatte wenigstens teilweise auszugleichen vermag, was insgesamt zu einem besseren Klebeverbund führt.

Nach einer besonders bevorzugten Ausführungsform der erfindungsgemäßen Baustoffplatte ist die Metallschicht zumindest abschnittsweise mit einer Deckschicht versehen. Die Deckschicht ist häufig dazu gedacht, das optische Erscheinungsbild der Baustoffplatte zu gestalten und umfasst beispielsweise ein Material, welches ausgewählt ist aus Furnierhölzern, Kunststoffen, Schichtstoffplatten und dergleichen. Als Furnierhölzer können Nadel- oder auch Hartholzfurniere verwendet werden. Wenn besonderer Wert auf eine geringe Selbstentzündungsnelgung gelegt wird, sollten Hartholzfurniere zum Einsatz kommen. Die Deckschicht kann auch vollflächig auf die Metallschicht aufgebracht sein. Ist die Metallschicht beidseitig auf der Grundplatte vorgesehen, so kann auch die Deckschicht auf beiden Seiten vollflächig aufgebracht sein.

Zudem ist es möglich, die Stoßkanten der Grundplatte mit einer Deckschicht zu versehen. Die Deckschicht kann in diesem Fall auch unmittelbar auf den Stoßkanten der Grundplatte befestigt werden, beispielsweise über eine Verklebung. Gleichfalls können die Stoßkanten der Grundplatte vor der Anbringung von Deckschichten ebenfalls mit Metallschichten analog zu den Hauptflächen versehen sein.

Besonders vorteilhaft ist eine Kombination von Hartholzfurnieren mit einer Aluminium-haltigen Metallschicht, da der Schmelzpunkt von Aluminium zum Teil unterhalb des Flammpunktes bestimmter Kartholzfurniere liegen kann. Durch Behandeln der Furniere mit einem Flammschutzmittel kann der Flammpunkt zudem noch weiter erhöht werden. Die Aluminiumschmelze kann im Brandfall aufschmelzen, die noch nicht entzündete Furnierschicht kühlen und/oder benetzen und dadurch deren Entzündung verhindern oder zumindest hinauszögern.

Wird für die Deckschicht eine Schichtstoffplatte verwendet, so kann diese als Phenolharzverbundplatte ausgestaltet sein, insbesondere als HPL- (High Pressure Laminate) oder CPL-Platte (Continous Pressing Laminate).

Die Deckschicht kann optional mit einem Flammschutzmittel versehen sein. Dazu kann ein hierfür geeignetes Flammschutzmittel in das Material der Deckschicht integriert und/oder die Deckschicht hiermit ausgerüstet sein. Geeignete Flammschutzmittel sind beispielsweise Flammschutzmittel wie polybromierte Diphenylether (PentaBDE, OctaBDE, DecaBDE), TBBPA und HBCD, Melamin, Harnstoff, APP (Ammoniumpolyphosphat), TCEP (Tris(chlorethyl)phosphat), TCPP (Trls(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)), BDP (Bisphenol-A-bis(diphenylphosphat)), ATH (Aluminiumhydroxid), MDH (Magnesiumhydroxid), Ammoniumsulfat ((NH₄)₂SO₄) und - phosphat ((NH₄)₂PO₄).

Die Dicke der Deckschicht kann über weite Bereiche variieren. Besonders bevorzugt ist es jedoch, wenn die Dicke der Deckschicht höchstens 0,5 mm beträgt, insbesondere 0,45 mm oder weniger, vorzugsweise höchstens 0,35 mm weiter bevorzugt höchstens 0,20 mm. Besonders bevorzugt bewegt sich die Dicke der Deckschicht im Bereich von 0,20 mm bis zu 0,6 mm, speziell von 0,3 bis zu oder weniger als 0,45 mm. Diese Dicken sind besonders vorteilhaft, weil Deckschichten dieser Stärke, beispielsweise aus Furnierholz, einerseits aus optischen Gesichtspunkten vollkommen ausreichend sind.

Die vorgenannten Dicken der Deckschicht können dadurch erreicht werden, dass von vornherein das Material der Deckschicht In entsprechender Stärke verwendet wird.

Bei der erfindungsgemäßen Baustoffplatte Ist es weiterhin bevorzugt, wenn die Deckschicht mit der Metallschicht verklebt ist, insbesondere mittels eines Wasserglasklebers oder eines organischen Klebstoffs. Als organische Klebstoffe können im Prinzip sämtliche Klebstoffe verwendet werden, die sich zur Verbindung einer Metalloberfläche mit dem jeweiligen Material der Deckschicht eignen. Dies sind vor allem die Reaktivklebstoffe, wie Silikone, 1-K oder 2K-Polyurethanklebstoffe oder 1-K oder 2K-Epoxidklebstoffe. Aber auch Haftklebstoffe in Form von Dispersions- oder Lösemittelklebstoffen können verwendet werden, wie solche auf Basis von Polyvinylalkoholen, Acrylaten, Stärkederivaten, Leimen und dergleichen.

Die vorliegende Erfindung wird im Folgenden anhand eines in einer Figur dargestellten Ausführungsbeispiels näher erörtert. Dabei zeigt die einzige Figur eine erfindungsgemäße Baustoffplatte in seitlicher Schnittdarstellung.

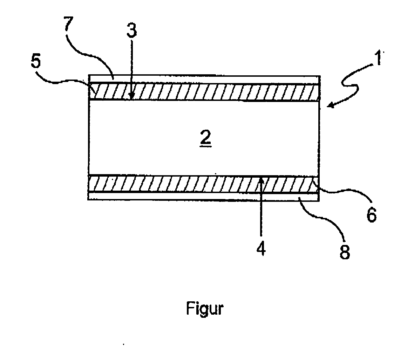

In Fig. 1 ist eine erfindungsgemäße Baustoffplatte 1 abgebildet. Die Baustoffplatte 1 umfasst eine Grundplatte 2 aus einem nicht brennbaren, Perlit-haltigen Silikatmaterial (SUPALUX^{®}-M von PROMAT). Die Grundplatte 2 besitzt eine Dichte von etwa 640 kg/m³.

Die Grundplatte hat zwei einander gegenüberliegende Hauptflächen 3, 4, auf die jeweils ein Aluminiumblech 5, 6 mit einer Stärke von jeweils 2 mm unter Verwendung eines handelsüblichen Wasserglasklebers geklebt ist. Jedes der Aluminiumbleche ist wiederum mit einer Deckschicht 7, 8 aus Buchenholzfumier in einer Stärke von jeweils 0,20 mm versehen, welche ebenfalls mittels eines Wasserglasklebers befestigt sind. Die in Fig. 1 dargestellte Baustoffplatte ist nicht brennbar im Sinne der DIN 4102-A1.

### Bezugszeichenliste

- 1: Baustoffplatte
- 2: Grundplatte
- 3: Hauptfläche
- 4: Hauptfläche
- 5: Metallschicht
- 6: Metallschicht
- 7: Deckschicht
- 8: Deckschicht

## Patentansprüche

1. Baustoffplatte (1) mit einer zwei gegenüberliegende Hauptflächen (3, 4) aufweisenden mineralischen, nicht brennbaren Grundplatte (2), wobei zumindest eine der Hauptflächen (3, 4) wenigstens abschnittsweise mit einer Metallschicht (5, 6) versehen ist, die aus Aluminium oder einer Aluminiumlegierung besteht,
**dadurch gekennzeichnet, dass**
die Metallschicht (5, 6) eine Dicke von zumindest 0,2 mm aufweist.

2. Baustoffplatte nach Anspruch 1,
**dadurch gekennzeichnet, dass**
die Metallschicht (5, 6) eine Dicke von zumindest 0,5 mm aufweist.

3. Baustoffplatte nach Anspruch 1 oder 2,
**dadurch gekennzeichnet, dass**
die Metallschicht (5, 6) eine Dicke von 0,2 bis 6 mm aufweist, insbesondere von 0,5 bis 4 mm.

4. Baustoffplatte nach einem der vorstehenden Ansprüche,
**dadurch gekennzeichnet, dass**
die Grundplatte (2) ein kieselsäurehaltiges Material, insbesondere ein Silicat enthält oder hieraus besteht.

5. Baustoffplatte nach einem der vorstehenden Ansprüche,
**dadurch gekennzeichnet, dass**
die Grundplatte (2) Perlite enthält.

6. Baustoffplatte nach einem der vorstehenden Ansprüche,
**dadurch gekennzeichnet, dass**
die Grundplatte (2) eine Dichte von 800 kg/m³ oder weniger aufweist, insbesondere 700 kg/m³ oder weniger.

7. Baustoffplatte nach einem der vorstehenden Ansprüche,
**dadurch gekennzeichnet, dass**
die Metallschicht (5, 6) auf der Grundplatte (2) verklebt ist, insbesondere mit einem Wasserglaskleber.

8. Baustoffplatte nach einem der vorstehenden Ansprüche,
**dadurch gekennzeichnet, dass**
die Metallschicht (5, 6) zumindest abschnittsweise mit einer Deckschicht (7, 8) versehen ist.

9. Baustoffplatte nach Anspruch 8,
**dadurch gekennzeichnet, dass**
die Deckschicht (7, 8) ein Material umfasst, welches ausgewählt ist aus Furnierhölzern, Kunststoffen, Schichtstoffplatten und dergleichen.

10. Baustoffplatte nach Anspruch 11,
**dadurch gekennzeichnet, dass**
die Schichtstoffplatte ausgewählt ist aus Phenolharzverbundplatten, insbesondere aus HPL- (High Pressure Laminate) oder CPL-Platten (Continous Pressing Laminate).

11. Baustoffplatte nach einem der Ansprüche 8 bis 10,
**dadurch gekennzeichnet, dass**
die Deckschicht (7, 8) ein Flammschutzmittel enthält und/oder hiermit ausgerüstet ist.

12. Baustoffplatte nach einem der Ansprüche 8 bis 11,
**dadurch gekennzeichnet, dass**
die Deckschicht (7, 8) eine Dicke von höchstens 0,5 mm, insbesondere von höchstens 0,45 mm aufweist.

13. Baustoffplatte nach einem der Ansprüche 8 bis 12,
**dadurch gekennzeichnet, dass**
die Deckschicht (7, 8) mit der Metallschicht (5, 6) verklebt ist, insbesondere mit einem Wasserglaskleber oder einem organischen Klebstoff.

## Claims

1. A building material plate (1) comprising a non-flammable mineral base plate (2) having two opposite main surfaces (3, 4), wherein at least one of the main surfaces (3, 4) is provided with a metal layer (5, 6) in at least some sections, which metal layer consists of aluminum or an aluminum alloy,
**characterized in that**
the metal layer (5, 6) comprises a thickness of at least 0.2 mm.

2. A building material plate according to claim 1,
**characterized in that**
the metal layer (5, 6) comprises a thickness of at least 0.5 mm.

3. A building material plate according to claim 1 or 2,
**characterized in that**
the metal layer (5, 6) comprises a thickness from 0.2 to 6 mm, preferably from 0.5 to 4 mm.

4. A building material plate according to one of the preceding claims,
**characterized in that**
the base plate (2) contains a siliceous material, in particular a silicate, or consists thereof.

5. A building material plate according to one of the preceding claims,
**characterized in that**
the base plate (2) contains perlites.

6. A building material plate according to one of the preceding claims,
**characterized in that**
the base plate (2) has a density of 800 kg/m³ or less, in particular 700 kg/m³ or less.

7. A building material plate according to one of the preceding claims,
**characterized in that**
the metal layer (5, 6) is glued onto the base plate (2), in particular by means of a water glass adhesive.

8. A building material plate according to one of the preceding claims,
**characterized in that**
the metal layer (5, 6) is provided with a cover layer (7, 8) in at least some sections.

9. A building material plate according to claim 8,
**characterized in that**
the cover layer (7, 8) comprises a material which is selected from veneer wood, plastics, laminated panels and the like.

10. A building material plate according to claim 9,
**characterized in that**
the laminated panel is selected from phenolic resin composite panels, in particular from HPL (high pressure laminate) or CPL (continuous pressing laminate) panels.

11. A building material plate according to one of the claims 8 to 10,
**characterized in that**
the cover layer (7, 8) contains a flame retardant and/or is equipped therewith.

12. A building material plate according to one of the claims 8 to 11,
**characterized in that**
the cover layer (7, 8) has a thickness of not more than 0.5 mm, in particular not more than 0.45 mm.

13. A building material plate according to one of the claims 8 to 12,
**characterized in that**
the cover layer (7, 8) is glued with the metal layer (5, 6), in particular by means of a water glass adhesive or an organic adhesive.

## Revendications

1. Panneau de construction (1) comprenant une plaque de base (2) minérale et incombustible, qui comprend deux surfaces principales (3, 4) opposées, au moins une des surfaces principales (3, 4) étant munie d'une couche métallique (5, 6) au moins dans quelques parties, la couche métallique consistant en aluminium ou en un alliage d'aluminium,
**caractérisé en ce que**
la couche métallique (5, 6) comprend une épaisseur d'au moins 0,2 mm.

2. Panneau de construction selon la revendication 1,
**caractérisé en ce que**
la couche métallique (5, 6) comprend une épaisseur d'au moins 0,5 mm.

3. Panneau de construction selon la revendication 1 ou la revendication 2,
**caractérisé en ce que**
la couche métallique (5, 6) comprend une épaisseur comprise entre 0,2 et 6 mm, notamment entre 0,5 et 4 mm.

4. Panneau de construction selon l'une des revendications précédentes,
**caractérisé en ce que**
la plaque de base (2) contient ou consiste en un matériau contenant de la silice, notamment un silicate.

5. Panneau de construction selon l'une des revendications précédentes,
**caractérisé en ce que**
la plaque de base (2) contient des perlites.

6. Panneau de construction selon l'une des revendications précédentes,
**caractérisé en ce que**
la plaque de base (2) comprend une densité de 800 kg/m³ ou moins, notamment de 700 kg/m³ ou moins.

7. Panneau de construction selon l'une des revendications précédentes,
**caractérisé en ce que**
la couche métallique (5, 6) est collée sur la plaque de base (2), notamment par moyen d'une colle de verre d'eau.

8. Panneau de construction selon l'une des revendications précédentes,
**caractérisé en ce que**
la couche métallique (5, 6) est munie d'une couche de recouvrement (7, 8) au moins dans quelques parties.

9. Panneau de construction selon la revendication 8,
**caractérisé en ce que**
la couche de recouvrement (7, 8) comprend un matériau qui est sélectionné dans les bois de placage, les plastiques, les panneaux stratifiés et similaire.

10. Panneau de construction selon la revendication 9,
**caractérisé en ce que**
le panneau stratifié est sélectionné dans les plaques composites en résine phénolique, notamment dans les plaques HPL (high pressure laminate) ou les plaques CPL (continuous pressing laminate).

11. Panneau de construction selon l'une des revendications 8 à 10,
**caractérisé en ce que**
la couche de recouvrement (7, 8) contient un retardateur de flammes et/ou est équipée d'un tel retardateur de flammes.

12. Panneau de construction selon l'une des revendications 8 à 11,
**caractérisé en ce que**
la couche de recouvrement (7, 8) comprend une épaisseur d'au plus 0,5 mm, notamment d'au plus 0,45 mm.

13. Panneau de construction selon l'une des revendications 8 à 12,
**caractérisé en ce que**
la couche de recouvrement (7, 8) est collée avec la couche métallique (5, 6), notamment par moyen d'une colle de verre d'eau ou d'une colle organique.
